# FASCICULE DE BREVET EUROPEEN

(11) **EP 1 344 305 B1**
(45) Date de publication et mention de la délivrance du brevet: **20.10.2010**
(21) Numéro de dépôt: 01994885.0
(22) Date de dépôt: 17.12.2001
(51) Int. Cl.: H02M 7/10, B05B 5/053

(54) **GENERATEUR DE HAUTE TENSION POUR EQUIPEMENT DE PEINTURE ELECTROSTATIQUE**
HOCHSPANNUNGSGENERATOR FÜR ELEKTROSTATISCHE FARBAUFBRINGUNGSGERÄTE
HIGH VOLTAGE GENERATOR FOR ELECTROSTATIC PAINTING EQUIPMENT

(30) Priorité: 18.12.2000 FR 0016525
(43) Date de publication de la demande: 17.09.2003
(73) Titulaire: EISENMANN Anlagenbau GmbH & Co. KG, 71032 Böblingen (DE)
(72) Inventeur: DOBROWOLSKI, Flavien, F-38650 SINARD (FR)
(74) Mandataire: Ostertag, Ulrich
(86) Numéro de dépôt international: PCT/FR2001/004023
(87) Numéro de publication internationale: WO 2002/050988

(56) Documents cités:
- DE-B- 1 259 452
- US-A- 3 731 145
- US-A- 4 050 005
- US-A- 5 067 434

## Description

La présente invention concerne, de façon générale, les équipements de peinture électrostatique, tels que les pulvérisateurs utilisés sur les robots de peinture, dans l'industrie automobile. Plus particulièrement, cette invention se rapporte à un ensemble générateur de haute tension électrique, susceptible de générer une haute tension (typiquement de plusieurs dizaines de kilovolts) appliquée à l'électrode d'un tel équipement de peinture électrostatique, dans le but de charger la peinture électriquement, afin d'améliorer le rendement de dépôt de cet équipement de peinture et sa qualité d'application de peinture.

De tels dispositifs sont connus, par exemple, par les documents US 3608823 A, US 3731145 A et US 5067434 A.

Ces dispositifs sont en général constitués par la combinaison d'une unité électronique de commande, générant une tension alternative d'amplitude et de fréquence variables, dite basse tension, et d'une "cascade" comprenant notamment un transformateur et un multiplicateur de tension.

L'unité électronique de commande délivre, en général, une basse tension alternative, sensiblement sinusoïdale, dont la fréquence est de l'ordre de quelques dizaines de kilohertz (en particulier comprise entre 20 et 50 KHz), et dont l'amplitude (de crête à crête) est de l'ordre de quelques dizaines de volts.

Le transformateur a habituellement un rapport de transformation d'environ 100, et sa tension de sortie est de l'ordre de 10000 volts (de crête à crête). Le multiplicateur est constitué d'étages redresseurs comprenant chacun un condensateur et une diode, deux étages consécutifs étant montés en série de manière à doubler la tension de crête issue du transformateur.

L'évolution de la technique des pulvérisateurs de peinture tend, d'une part, à réduire fortement leur grosseur, et notamment leur diamètre extérieur, afin de réduire les salissures provoquées par le surplus de peinture projeté dans la cabine de peinture.

Mais d'autre part, les normes en vigueur, en Europe et aux U.S.A. obligent actuellement à intégrer la "cascade" haute tension à l'intérieur des pulvérisateurs, afin de minimiser l'énergie électrique stockée qui est susceptible de se décharger en cas d'étincelle. Plus précisément, d'après les normes actuellement applicables, l'énergie libérée lors d'une étincelle doit être inférieure à 0,24 millijoule, pour les peintures liquides solvantées, et être inférieure à 5 millijoules pour la peinture en poudre, afin de ne pas provoquer d'inflammation. Aussi, l'énergie dans la "cascade" haute tension, ainsi que dans le pulvérisateur lui-même, doivent être minimisées.

Ces exigences conduisent déjà à placer la "cascade" haute tension à l'intérieur du pulvérisateur, étant donné que, si cette "cascade" est située à l'extérieur, elle doit être raccordée au pulvérisateur par un câble haute tension, par nature capacitif, qui stockerait une énergie trop importante.

Le logement des "cascades" haute tension à l'intérieur des pulvérisateurs conduit à réduire leurs dimensions, et notamment leur section. Afin de maintenir les distances d'isolation appropriées, pour des hautes tensions de l'ordre de 100 kV, entre l'électrode du pulvérisateur et le côté "basse tension" de la "cascade", une distance minimale, de l'ordre d'une vingtaine de centimètres, est nécessaire. La "cascade" doit donc être conçue de manière à s'étendre dans le sens de la longueur du pulvérisateur. Autrement dit, pour une "cascade" de volume donné, il vaut mieux que celle-ci possède une longueur plus importante et une section plus petite.

Cette exigence résulte aussi de ce que les diamètres des pulvérisateurs sont de plus en plus faibles, comme déjà indiqué plus haut, ces pulvérisateurs devant encore loger d'autres composants : vannes, conduits divers (air, solvant, peinture), moteur , turbine, dispositif de mesure de vitesse de la turbine (par exemple par fibre optique).

La longueur totale des pulvérisateurs doit cependant rester raisonnable, car cette longueur a une influence sur la largeur totale des cabines de peinture.

L'encombrement du multiplicateur de tension d'une "cascade" haute tension, constitué par des étages à condensateur et diode, peut être réduit au maximum en plaçant les diodes au plus près des condensateurs, et en réduisant les diamètres des condensateurs.

Toutefois, s'agissant de condensateurs dont le diélectrique est constitué par un disque de céramique, la valeur de la capacité de ces condensateurs est donnée par la formule : C = ε x d/s, où :
- ε est la constante diéliectrique de la céramique,
- d est la hauteur du disque de céramique,
- s est la section du disque de céramique.

En application de cette formule, on constate que, pour une constante diélectrique donnée de la céramique, diminuer la section du disque de céramique conduit à augmenter la valeur de la capacité, donc de l'énergie stockée, ce qui est néfaste pour la sécurité comme déjà discuté plus haut. De plus, il est nécessaire d'utiliser, pour les condensateurs, une céramique dont la constante diélectrique est la plus stable possible en fonction de la température, ce qui laisse un choix limité pour les matières, donc pour le facteur ε.

Par ailleurs, le multiplicateur de tension n'est pas, actuellement, la partie de la "cascade" haute tension ayant la plus grande section, le transformateur possédant habituellement une section plus importante. Ainsi, la seule réduction du diamètre des condensateurs du multiplicateur de tension ne sufffit pas, pour résoudre le problème ici posé, et il faudrait aussi intervenir sur le transformateur.

Le transformateur reste, cependant, la partie la plus difficile à réaliser, et notamment à miniaturiser, tout en conservant la puissance ici requise, de l'ordre de 15VA, avec un rapport de transformation de l'ordre de 100.

Le primaire du transformateur est déterminé de manière à avoir une induction magnétique minimale de l'ordre de 0,1 à 0,2 teslar, afin de minimiser les pertes fer, données par la formule : Pfer (B) - B ^{(2+x)} avec : 0 ≤ x ≤ 1. Ceci oblige à avoir un nombre N1 important de spires au primaire du transformateur, en application de la formule : B - 1/N1. En conséquence, et compte tenu du rapport de transformation désiré, le secondaire du transformateur doit comporter plusieurs milliers de spires.

Les spires du primaire sont, en général, situées au coeur du transformateur, tandis que les spires du secondaire sont disposées en plusieurs couches, vers l'extérieur. Ceci implique des sections totales de transformateur importantes.

Il convient aussi de minimiser l'ensemble des pertes dans le transformateur, pertes qui se composent notamment des pertes cuivre et des pertes fer.

Les pertes cuivre dépendent de la résistance du bobinage primaire et de la résistance du bobinage secondaire. Chacune de ces résistances dépend de la longueur totale du bobinage et de la section du fil qui constitue ce bobinage. Ainsi, une section de fil plus faible entraîne une résistance plus grande, à longueur égale, et par conséquent des pertes cuivre plus élevées. De même, l'augmentation du nombre de spires augmente la longueur totale du bobinage, donc les pertes cuivre. Une simple diminution de section du fil, ou une augmentation du nombre de spires, ne constituent donc pas des solutions en soi satisfaisantes.

Quant aux pertes fer, celles-ci dépendent de l'induction magnétique, comme déjà expliqué plus haut, mais aussi de la fréquence et de la nature de la matière magnétique utilisée pour conduire le flux magnétique, ainsi que du volume globlal de cette matière. Afin de fonctionner à une fréquence de quelques dizaines de kilohertz, on utilise des ferrites pour conduire le flux magnétique, choisies ici parmi les différentes natures et formes de ferrites classiquement utilisées dans le domaine de l'électronique. A cet égard, également, les solutions actuelles ne sont pas satisfaisantes ; en particulier, une réalisation connue typique consiste en un transformateur bobiné sur un noyau cylindrique en ferrite, qui ne referme pas le flux magnétique, de sorte que la tension de sortie décroît lorsque l'intensité augmente ; le rendement de dépôt de la peinture, qui dépend de cette tension de sortie, diminue lui aussi avec l'augmentation de l'intensité.

Des problèmes analogues, notamment d'ordre dimensionnel, se posent aussi dans le cas de pistolets manuels pour projection de peinture.

La présente invention vise à résoudre tous les problèmes précédemment exposés, en proposant une réalisation de "cascade" haute tension améliorée aussi dans sa partie "transformateur", de manière à permettre une réduction de diamètre appréciable de la "cascade", facilitant son incorporation dans le pulvérisateur ou autre équipement, tout en conservant la puissance requise et en améliorant les conditions de fonctionnement de l'ensemble.

A cet effet, l'invention a essentiellement pour objet un générateur de haute tension pour équipement de peinture électrostatique, ledit générateur comportant notamment, logée à l'intérieur de l'équipement, une "cascade" haute tension comprenant d'une part un transformateur élévateur de tension, et d'autre part un multiplicateur de tension placé à la sortie du transformateur, ce générateur étant **caractérisé en ce que** ledit transformateur est constitué par un transformateur double ou multiple, composé d'au moins deux transformateurs élémentaires, dont les bobinages primaires respectifs sont montés électriquement en parallèle, et dont les bobinages secondaires respectifs sont montés électriquement en série, le montage en série des bobinages secondaires fournissant une tension de sortie, somme des tensions aux bornes de chacun des bobinages secondaires, et qui est la tension d'entrée du multiplicateur de tension.

Par exemple, pour réaliser l'équivalent d'un transformateur unique dont le rapport de transformation est égal à 100, l'invention peut être mise en oeuvre en combinant deux transformateurs élémentaires, chacun de rapport égal à 50, les primaires respectifs des deux transformateurs élémentaires étant montés en parallèle et alimentés ainsi, tous deux, par la basse tension, tandis que les secondaires respectifs de ces deux transformateurs élémentaires, montés en série, fournissent aux bornes de ce montage en série une tension de sortie adéquate (double de la tension aux bornes de chaque secondaire), qui est la tension d'entrée du multiplicateur de tension.

Le générateur, objet de l'invention, se caractérise ainsi par la combinaison particulière de deux ou plusieurs transformateurs élémentaires dans la "cascade" haute tension. Une forme de réalisation préférée de l'invention prévoit que ces deux ou plusieurs transformateurs élémentaires sont disposés coaxialement, les uns à la suite des autres, de telle sorte que le diamètre maximal ou la section maximale de la "cascade" n'est pas supérieur au diamètre ou à la section de chaque transformateur élémentaire.

Avantageusement, chaque transformateur élémentaire est un transformateur de forme extérieure cylindrique ou sensiblement cylindrique, avec une partie en ferrite en forme de pot, assurant la fermeture du flux magnétique sur lui-même.

Ainsi, pour chacun des transformateurs élémentaires, le nombre de spires du secondaire est divisé par le nombre des transformateurs élémentaires (en comparaison avec la solution actuelle à transformateur unique). Certes, l'invention conduit à augmenter le nombre des primaires mais, tous les primaires étant montés électriquement en parallèle, on divise le courant électrique les parcourant, et ainsi on peut les réaliser avec une section de fil plus petite. De plus, dans un transformateur élémentaire de section globale plus petite, les spires du primaire se trouvent moins "enterrées" (situées en profondeur) et peuvent bénéficier d'un échange thermique plus satisfaisant. Par ailleurs, la différence de potentiel entre spires, et entre couches de spires, au secondaire, est plus faible puisque le potentiel global entre l'entrée et la sortie du bobinage secondaire de chaque transformateur élémentaire est divisé par le nombre des transformateurs élémentaires, égal par exemple à deux ou trois. Ceci permet de réduire les tolérances pour les lignes de fuite dés bobinages, et de remplir de manière optimale la fenêtre de la partie en ferrite.

Tous ces éléments permettent de réduire la section des transformateurs élémentaires, donc la section de la "cascade" elle-même, dans la mesure où cette section est déterminée essentiellement par celle de la partie "transformateur", et où les transformateurs élémentaires, par exemple au nombre de deux ou trois, sont de préférence disposés coaxialement.

Selon une caractéristique complémentaire de l'invention, pour que la réduction des dimensions de la "cascade" haute tension ne s'accompagne pas d'une diminution désavantageuse de la distance d'isolement, il est prévu que la connexion côté "haute tension" du générateur s'effectue par une disposition à chicanes, permettant d'allonger la distance d'isolement de la haute tension par rapport à la masse, sans toutefois augmenter la longueur géométrique de la "cascade", et sans nécessiter aucune pièce supplémentaire.

Dans l'ensemble, on obtient ainsi une "cascade" haute tension qui peut être aisément incorporée à un pulvérisateur ou pistolet manuel de peinture, même de diamètre réduit, et sans que cela ne nécessite un allongement, non souhaitable, du pulvérisateur ou pistolet.

L'invention sera mieux comprise à l'aide de la description qui suit, en référence au dessin schématique annexé représentant, à titre d'exemples, quelques formes d'exécution de ce générateur de haute tension pour équipement de peinture électrostatique :
la figure 1 représente, en perspective, une "cascade" haute tension d'un tel générateur, avec ses divers éléments constitutifs ;
la figure 2 est un schéma électrique du transformateur de la "cascade" de la figure 1 ;
la figure 3 représente en perspective la même "cascade", moulée dans une résine isolante ;
la figure 4 est une vue en perspective, simplifiée, d'un pulvérisateur de peinture dans lequel est intégrée une telle "cascade" ;
la figure 5 illustre, sous forme de schéma électrique, une variante du transformateur.

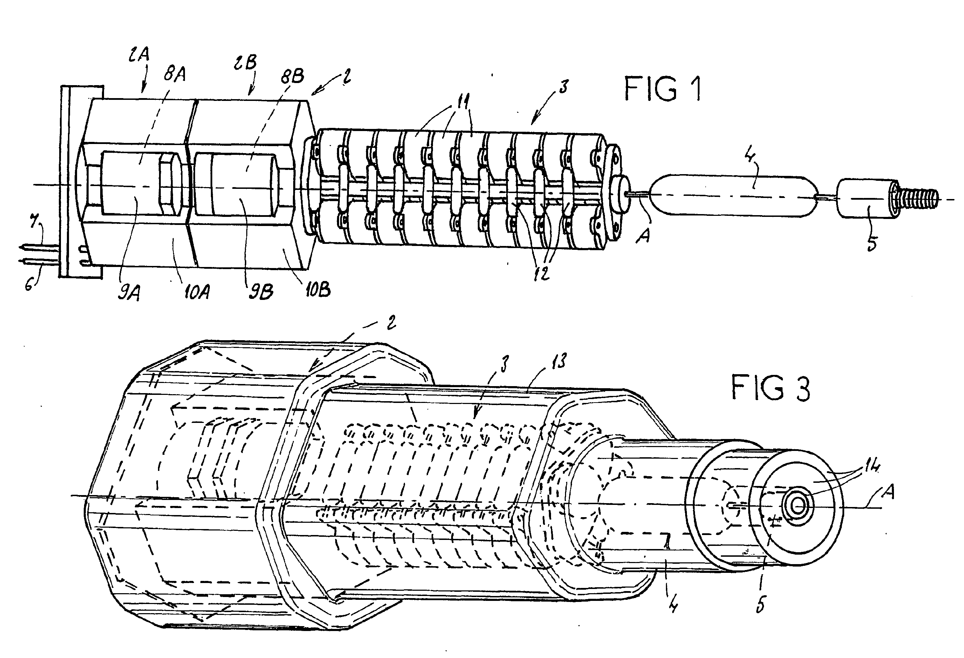

La figure 1 représente une "cascade" haute tension, avec ses constituants, disposés en ligne suivant un même axe central A, qui sont successivement : une partie "transformateur" 2, un multiplicateur de tension 3, une résistance 4 de limitation de courant, et un contact haute tension 5, tous ces composants étant connectés entre eux, mécaniquement et électriquement. L'ensemble est alimenté électriquement, du côté du transformateur 2, par une tension alternative fournie par une unité électronique de commande (non représentée), cette "basse tension" étant amenée à des bornes d'entrée 6 et 7.

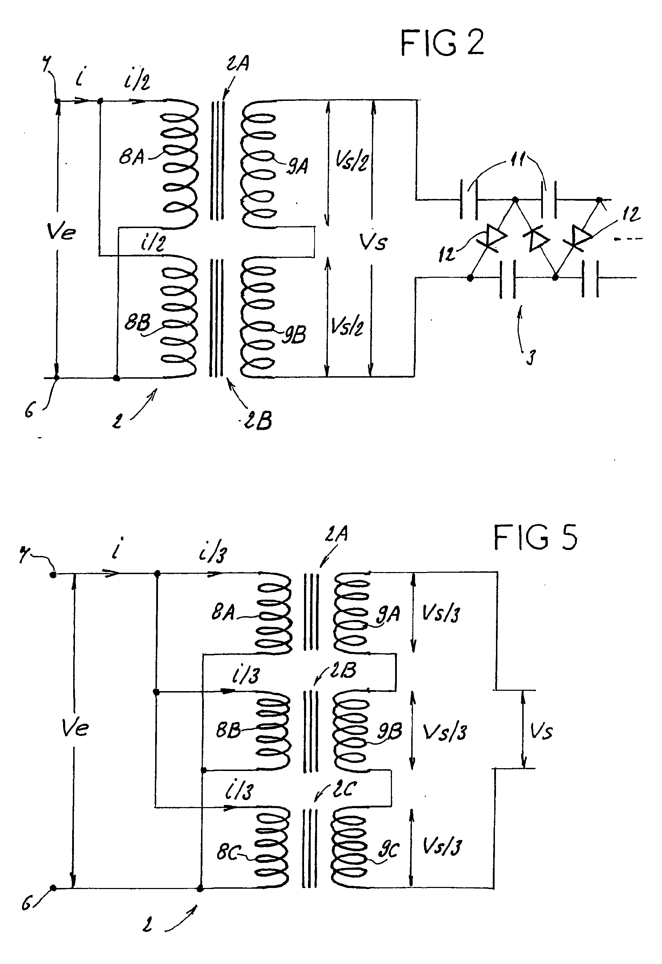

Selon l'invention, et dans l'exemple ici illustré aux figures 1 et 2, le transformateur 2, élévateur de tension, est un transformateur double, composé de deux transformateurs élémentaires 2A et 2B, de structure identique, accolés l'un à l'autre.

Dans le détail, et comme le montre plus particulièrement la figure 2, le premier transformateur élémentaire 2A possède un bobinage primaire 8A et un bobinage secondaire 9A ; les deux bobinages 8A et 9A sont enroulés sur le noyau central d'un pot en ferrite 10A, par exemple du type dit "RM", qui permet au flux magnétique de se refermer. De manière similaire, le deuxième transformateur élémentaire 2B possède un bobinage primaire 8B et un bobinage secondaire 9B ; les deux bobinages 8B et 9B sont enroulés sur le noyau central d'un pot en ferrite 10B, qui permet au flux magnétique de se refermer.

A partir des deux bornes d'entrée 6 et 7, les bobinages primaires respectifs 8A et 8B des deux transformateurs élémentaires 2A et 2B sont montés électriquement en parallèle, de telle sorte que chaque bobinage primaire 8A ou 8B est alimenté sous la même tension d'entrée Ve, mais est parcouru par un courant d'intensité i/2 égale à la moitié de l'intensité i du courant délivré par l'électronique de commande.

Par contre, les bobinages secondaires respectifs 9A et 9B des deux transformateurs élémentaires 2A et 2B sont montés électriquement en série, de telle sorte que la tension aux bornes de chaque bobinage secondaire 9A ou 9B soit égale à la moitié, soit Vs/2, de la tension de sortie Vs de la partie transformateur 2.

Cette partie transformateur 2 possède, typiquement, un rapport de transformation égal à 100, c'est-à-dire que sa tension de sortie Vs est égale à cent fois sa tension d'entrée Ve. Pour parvenir à ce résultat, il convient que chaque transformateur élémentaire 2A ou 2B possède un rapport de transformation égal à 50, ce qui détermine le rapport des nombres de spires des enroulements primaires 8A, 8B et secondaires 9A, 9B de ces transformateurs élémentaires 2A et 2B.

La tension de sortie Vs de la partie transformateur 2 est encore multipliée, par le facteur désiré égal par exemple à vingt, dans le multiplicateur de tension 3 qui, de manière connue en soi, comprend une série d'étages redresseurs à condensateurs 11 et diodes 12, la tension Vs constituant la tension d'entrée de ce multiplicateur de tension 3.

Comme le montre la figure 3, l'ensemble des composants précédemment décrits est avantageusement noyé dans une matière d'enrobage 13, plus particulièrement dans une résine isolante. Cette matière d'enrobage 13 forme, à l'avant de la "cascade" c'est-à-dire dans la région du contact haute tension 5, des chicanes 14 qui permettent d'allonger la distance d'isolement de la haute tension, sans pour autant augmenter la longueur constructive totale (suivant l'axe A) de ladite "cascade".

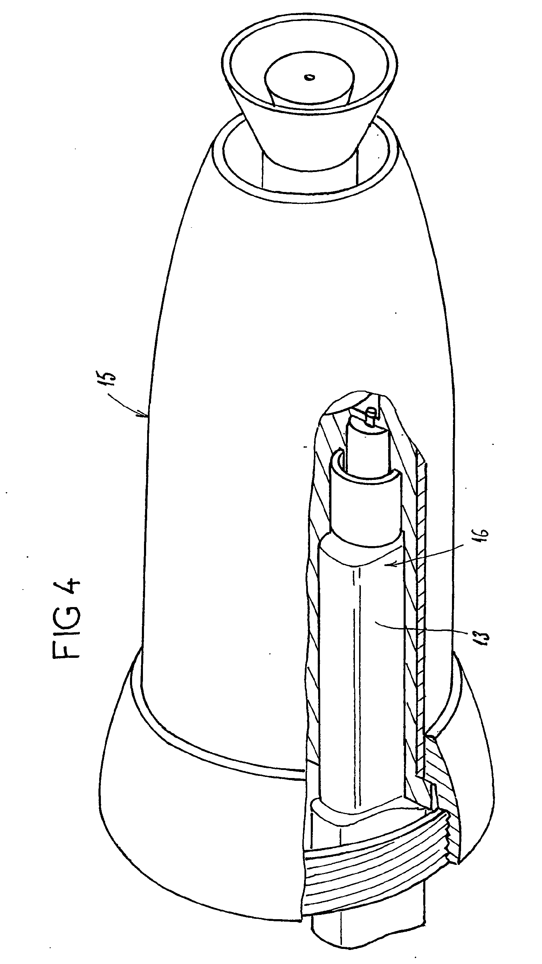

La "cascade" haute tension, réalisée comme il vient d'être décrit, est incorporable à un pulvérisateur 15 de peinture électrostatique, de la manière illustrée très schématiquement sur la figure 4, où cette "cascade" est indiquée, dans sa globalité, par le repère 16. La section des deux transformateurs élémentaires 2A et 2B détermine la section maximale de la "cascade" 16, cette section pouvant être ici maintenue à une valeur relativement faible. Le pulvérisateur 15 est porté par un robot de peinture, non représenté.

Le nombre des transformateurs élémentaires, qui composent la partie "transformateur" 2, peut être supérieur à deux, ce qui permet une réduction supplémentaire de la section maximale de la "cascade". Ainsi, la figure 5 illustre une variante, dans laquelle cette partie 2 se compose de trois transformateurs élémentaires 2A, 2B et 2C. Les bobinages primaires respectifs 8A, 88 et 8C des trois transformateurs élémentaires 2A, 2B et 2C sont montés en parallèle, donc alimentés chacun sous la tension d'entrée Ve. Les bobinages secondaires respectifs 9A, 9B et 9C de ces trois transformateurs élémentaires 2A, 2B et 2C sont montés en série, la tension aux bornes de chacun d'eux étant égale aux tiers (Vs/3) de la tension de sortie Vs.

Le nombre des transformateurs élémentaires de la "cascade", ou leur rapport de multiplication, ou encore le nombre des étages du multiplicateur de tension, peuvent naturellement être modifiés sans que l'on s'éloigne du cadre de l'invention. Dans le même ordre d'idées, l'invention est applicable non seulement à des pulvérisateurs de peinture portés par des robots de peinture, mais aussi à des pistolets manuels de peinture, et à d'autres équipements analogues. Enfin, le générateur de haute tension, objet de la présente invention, s'applique aussi bien aux équipements pour peinture en poudre qu'aux équipements pour peinture liquide.

## Revendications

1. Générateur de haute tension dans un équipement (15) de peinture électrostatique, ledit générateur comportant notamment, logée à l'intérieur de l'équipement (15), une "cascade" haute tension (16) comprenant d'une part un transformateur (2) élévateur de tension, et d'autre part un multiplicateur de tension (3) placé à la sortie du transformateur (2), **caractérisé en ce que** ledit transformateur (2) est constitué par un transformateur double ou multiple, composé d'au moins deux transformateurs élémentaires (2a, 2B, 2C) disposés l'un derrière l'autre, dont les bobinages primaires respectifs (8A, 8B, 8C) sont montés électriquement en parallèle, et dont les bobinages secondaires respectifs (9A, 9B, 9C) sont montés électriquement en série, le montage en série des bobinages secondaires (9A, 9B, 9C) fournissant une tension de sortie (Vs), somme des tensions (Vs/N) aux bornes de chacun des bobinages secondaires, et qui est la tension d'entrée du multiplicateur de tension (3).

2. Générateur de haute tension selon la revendication 1, **caractérisé en ce que** les deux ou plusieurs transformateurs élémentaires (2A, 2B, 2C) sont disposés coaxialement, les uns à la suite des autres, de telle sorte que le diamètre maximal ou la section maximale de la "cascade" (16) n'est pas supérieur au diamètre ou à la section de chaque transformateur élémentaire (2A, 2B, 2C).

3. Générateur de haute tension selon la revendication 1 ou 2, **caractérisé en ce que** chaque transformateur élémentaire (2A, 2B, 2C) est un transformateur de forme extérieure cylindrique ou sensiblement cylindrique, avec une partie en ferrite (10A, 10B) en forme de pot, assurant la fermeture du flux magnétique sur lui-même.

4. Générateur de haute tension selon l'une quelconque des revevendications 1 à 3, **caractérisé en ce que** la connexion côté "haute tension" du générateur s'effectue par une disposition à chicanes (14), permettant d'allonger la distance d'isolement de la haute tension par rapport à la masse.

5. Générateur de haute tension selon l'une quelconque des revendications 1 à 4, **caractérisé en ce que** l'équipement de peinture est un pulvérisateur (15) de peinture électrostatique, porté par un robot de peinture.

## Claims

1. A high-voltage generator in a device (15) for electrostatic painting, the said generator including in particular, housed inside the device (15), a high-voltage cascade (16) comprising on the one hand a step-up transformer (2) and on the other a voltage multiplier (3) placed on the output side of the transformer (2),
**characterised in that** the said transformer (2) takes the form of a double or multiple transformer composed of at least two elementary transformers (2A, 2B, 2C) which are arranged one behind the other and whereof the respective primary windings (8A, 8B, 8C) are mounted electrically in parallel and whereof the respective secondary windings (9A, 9B, 9C) are mounted electrically in series, in which the fact that the secondary windings (9A, 9B, 9C) are mounted in series provides an output voltage (Vs) which is the sum of the voltages (Vs/N) at the terminals of each of the secondary windings and is the input voltage of the tension multiplier (3).

2. A high-voltage generator according to Claim 1, **characterised in that** the two or more elementary transformers (2A, 2B, 2C) are arranged coaxially one after the other such that the maximum diameter or maximum section of the cascade (16) is not greater than the diameter or section of each elementary transformer (2A, 2B, 2C).

3. A high-voltage generator according to Claim 1 or 2, **characterised in that** each elementary transformer (2A, 2B, 2C) is a transformer which is cylindrical or substantially cylindrical in its external shape, with a part made of ferrite (10A, 10B) in pot form, ensuring that the magnetic flux is self-contained.

4. A high-voltage generator according to any one of Claims 1 to 3, **characterised in that** the generator is connected on the high-voltage side by means of an arrangement of baffles (14) enabling the insulation clearance from earth of the high voltage to be made greater.

5. A high-voltage generator according to any one of Claims 1 to 4, **characterised in that** the painting device is an electrostatic paint spray gun (15) carried by a painting robot.

## Patentansprüche

1. Hochspannungsgenerator in einer elektrostatischen Lackiereinrichtung (15), wobei der Generator vor allem eine im Inneren der Einrichtung (15) gelegene Hochspannungskaskade (16) umfasst, die einerseits einen Aufspanntransformator (2) und andererseits einen am Ausgang des Transformators (2) angeordneten Spannungsvervielfacher (3) umfasst, **dadurch gekennzeichnet, dass** der Transformator (2) sich zusammensetzt aus einem Zweifach- oder Mehrfach-Transformator, der sich aus mindestens zwei hintereinander angeordneten Elementartransformatoren (2a, 2B, 2C) zusammensetzt, deren jeweilige Primärwicklungen (8A, 8B, 8C) elektrisch parallel geschaltet sind und deren jeweilige Sekundärwicklungen (9A, 9B, 9C) elektrisch in Serie geschaltet sind, so dass die Serienschaltung der Sekundärwicklungen (9A, 9B, 9C) eine Ausgangsspannung (Vs) als Summe der Spannungen (Vs/N) an den Klemmen jeder der Sekundärwicklungen liefert; welche die Eingangsspannung des Spannungsvervielfachers (3) ist.

2. Hochspannungsgenerator nach Anspruch 1, **dadurch gekennzeichnet, dass** die beiden oder mehreren Elementartransformatoren (2A, 2B, 2C) derart einer nach dem anderen koaxial angeordnet sind, dass der maximale Durchmesser oder der maximale Querschnitt der Kaskade (16) nicht größer ist als der Durchmesser oder der Querschnitt jedes Elementartransformators (2A, 2B, 2C).

3. Hochspannungsgenerator nach Anspruch 1 oder 2, **dadurch gekennzeichnet, dass** jeder Elementartransformator (2A, 2B, 2C) ein Transformator mit zylindrischer Außenform oder im Wesentlichen zylindrisch mit einem topfförmigen Ferrit-Teil (10A, 10B) ist, welcher den Schluss des magnetischen Flusses auf sich selbst sicherstellt.

4. Hochspannungsgenerator nach einem der Ansprüche 1 bis 3, **dadurch gekennzeichnet, dass** die hochspannungsseitige Verbindung des Generators über eine Schikanenanordnung (14) erfolgt, was erlaubt, die Isolierungsdistanz der Hochspannung in Bezug auf die Masse zu verlängern.

5. Hochspannungsgenerator nach einem der Ansprüche 1 bis 4, **dadurch gekennzeichnet, dass** die Lackiereinrichtung ein elektrostatischer Lackzerstäuber (15) ist, der von einem Lackierroboter getragen wird.
